# EUROPEAN PATENT SPECIFICATION

(11) **EP 0 916 219 B1**
(45) Date of publication and mention of the grant of the patent: **25.07.2007**
(21) Application number: 98918445.2
(22) Date of filing: 22.04.1998
(51) Int. Cl.: H04M 3/50

(54) **SERVER AND METHOD FOR AUTOMATICALLY DELIVERING MESSAGES TO A TELECOMMUNICATIONS DEVICE**
SERVER UND VERFAHREN ZUR AUTOMATISCHEN LIEFERUNG VON NACHRICHTEN ZU EINEM TELEKOMMUNIKATIONSGERÄT
SERVEUR ET METHODE POUR LA REMISE AUTOMATIQUE DE MESSAGES A UN DISPOSITIF DE TELECOMMUNICATION

(30) Priority: 23.04.1997 US 841516; 24.12.1997 US 998222
(43) Date of publication of application: 19.05.1999
(60) Divisional application: 06010649.9
(73) Proprietor: Nortel Networks Limited, St Laurent, Québec H4S 2A9 (CA)
(72) Inventor: FORTMAN, Peter, A., Raleigh, NC 27613 (US); WHITE, Lester, L., Raleigh, NC 27613 (US); KREDO, Thomas, Rochester, NY 14610 (US)
(74) Representative: Mackenzie, Andrew Bryan
(86) International application number: PCT/US1998/007886
(87) International publication number: WO 1998/048560

(56) References cited:
- WO-A-87/07801
- US-A- 5 351 276

## Description

### BACKGROUND OF THE INVENTION

The present invention relates generally to messaging systems and more particularly to a universal messaging center or mailbox that notifies subscribers of any type of message that is waiting for them, for example, voice mail, fax mail, e-mail, *etc.,* and allows subscribers to retrieve and respond to the messages in formats independent not only of each other but also of the format in which the message was originally transmitted. The present invention further relates to a messaging system and method that automatically transfer messages for display on subscriber equipment.

The trend in the telecommunications industry is toward providing a wide variety of information and communication services, or messaging services, over various communications networks to remote subscribers having diverse analog and digital communications equipment. These messaging services might include voice messaging, facsimile messaging, electronic mail, electronic document interchange, interactive voice response, audio text, speech synthesis, speech recognition, video messaging, video mail, *etc.*

To provide these messaging services, different types of communications equipment and processing protocols connect to a single host system or messaging center that provides the messaging services. The messaging center performs protocol conversions between the format employed by the messaging center and the various telecommunications formats employed by the diverse subscriber equipment.

Companies that provide messaging services over the public telephone network traditionally use hardwired transceiving and protocol conversion equipment dedicated to a particular type of equipment and communications format and protocol. Unfortunately, this approach suffers from high costs and lack of flexibility and adaptability. The disadvantages arise because dedicated hardware cannot be readily modified to increase data throughput, or handle communication protocols from new telecommunications equipment or services. Supporting multiple types of messaging services for diverse communications equipment thus requires costly module replacements and new designs for dedicated hardware.

Recently, some developers have proposed digital signal processing and multimedia interfaces to process the communication trunk lines. For example, U.S. Patent No. 5,497,373 to Hulen et al. describes a system with a host messaging center that supports numerous types of messaging applications and makes the necessary protocol conversions for different telecommunications protocols corresponding to various types of telecommunications media. The system uses multiple digital signal processors to perform real time protocol conversions between the different telecommunication protocols and the protocol of the host messaging center.

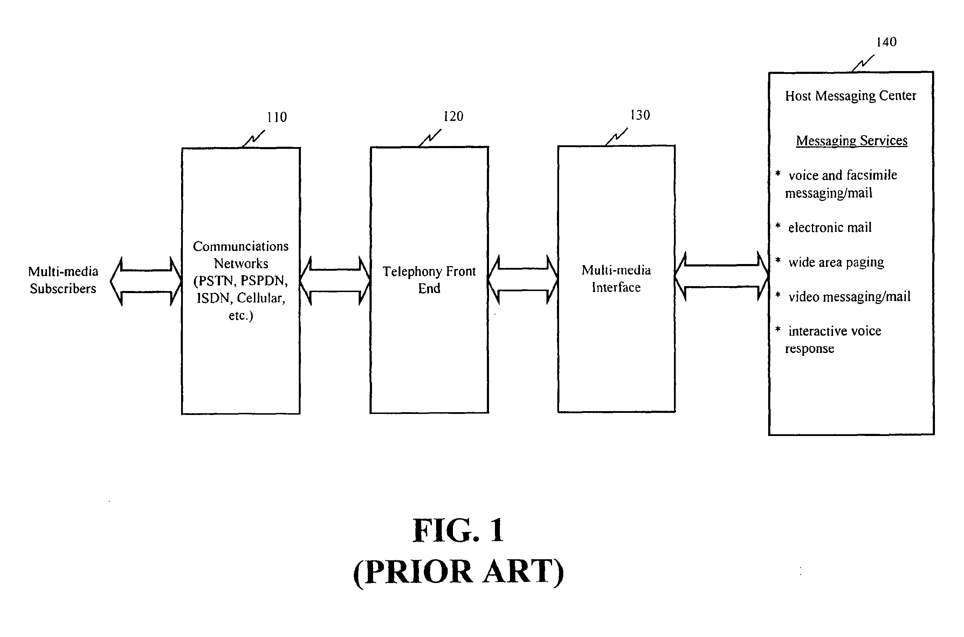

Fig. 1 is a block diagram showing how Hulen et al.'s messaging system might connect to multimedia subscribers through various public and private communications networks 110, including, for example, the public switched telephone network (PSTN), a public cellular or mobile telephone network (PLMN), and a packet switched public data network (PSPDN). The messaging system includes telephony front end equipment 120, multimedia interface 130, and host messaging center 140.

Telephony front end 120 interfaces to communications networks 110 and provides the necessary interface between a subscriber's voice or data channel from communications network 110 and the messaging system. Multimedia interface 130 performs protocol conversions of the information received in various telecommunications formats so host messaging center 140 can process and store the information in the host's data processing and storage format, typically a compressed data format.

Once converted, host messaging center 140 processes the relevant messaging information extracted from the communications channel to deliver the particular messaging or telephony service requested by the subscriber. Multimedia interface 130 then converts the information for responding to the subscriber's service request back into the communications protocol format used by the subscriber, and transmits the converted information to the subscriber via telephony front end 120 and communications network 110.

Multimedia interface 130 includes several parallel digital signal processors dynamically allocated to handle different types of protocol conversion for multiple communications channels. Host messaging center 140 downloads appropriate protocol conversion algorithms to selected digital signal processors depending upon the type of services required by a particular subscriber. The selected digital signal processors convert and store the information in the format of host messaging center 140 so host messaging center 140 can process the information according to the particular messaging services requested by the subscriber. The subscriber retrieves the information in the communications protocol format used by the subscriber.

With this system, a subscriber's responses to the retrieved information were limited to only the precise formats that the information was stored and retrieved. This limited the subscriber's options to retrieve and respond to messages by not allowing use of other telecommunications equipment having different or multiple formats. As a result, it is desirable to take advantage of the capabilities of current telecommunications equipment to provide subscribers with greater flexibility in the formats of retrieval and responses to messages.

In addition, conventional systems store pending messages until requested by a subscriber. The subscriber must therefore initiate the retrieval of the stored messages before the system delivers the messages to the subscriber's equipment. The subscriber might initiate message retrieval by dialing a telephone number for the messaging service and following a series of menus to retrieve the pending messages. As a result, a need has arisen to promptly notify and deliver messages to the subscriber's telecommunications equipment without requiring the subscriber to initiate retrieval of the messages.

Patent WO 87/07801 describes an alternative system where the network has a unified messaging system (UMS) to provide the access point for all messages regardless of the message format/origination. The user can then access the UMS mailbox using any terminal type. The user can also designate a receptor through which the user can be alerted to a received message. However, once alerted to the message the user still has to enter the receptor service using a set of message retrieval commands.

### SUMMARY OF THE INVENTION

In accordance with one aspect of the present invention there is provided a server as recited in Claim 1. In accordance with a second aspect of the present invention there is provided a method for automatically transferring information to subscriber as recited in Claim 10.

The present invention provides a server in a telecommunications network comprising means for receiving information intended for a subscriber from a caller in a caller format; means for translating the information to a subscriber format compatible with equipment of the subscriber; and means for automatically transferring the translated information to the subscriber equipment independent of any action by the subscriber. In accordance with an implementation consistent with the present invention, a universal mailbox is provided by which a subscriber can retrieve a pending message in a format independent of the format used to store the message, and respond to the message in a format independent of the format used to store or retrieve the message. In addition, the present invention provides a system and method that automatically translate messages to a format used by a subscriber's telecommunications equipment and deliver the translated messages to the subscriber's telecommunications equipment independent of any action by the subscriber.

In accordance with another implementation consistent with the present invention, the universal mailbox processes messages intended for a subscriber. A taller sends a message to the message center in a first caller format. The message center stores the message in the first caller format, notifies the subscriber, and awaits a request for the stored message from the subscriber. In response to the message request, the message center sends the stored message to the subscriber in a first subscriber format independent of the first caller format.

If the subscriber desires, the subscriber constructs a response to the message and sends it to the message center in a second subscriber format independent of the first caller format and the first subscriber format. The message center stores the response in the second subscriber format and sends the stored response to the caller in a second caller format independent of the first caller format and the first and second subscriber formats.

In accordance with another implementation consistent with the present invention, the system comprises a receiving element, a translating element, and a routing element. The receiving element receives messages intended for subscriber equipment from caller equipment in caller formats. The translating element translates the messages to a subscriber format compatible with the subscriber equipment. The routing element automatically transfers the translated messages to the subscriber equipment without requiring the subscriber to initiate the message transfer.

### BRIEF DESCRIPTION OF THE DRAWINGS

The accompanying drawings, which are incorporated in and constitute a part of this specification, illustrate an embodiment of the invention and, together with the description, explain the objects, advantages and principles of the invention. In the drawings,
Fig. 1 is a block diagram of a conventional messaging system;
Fig. 2 is a block diagram of an exemplary communications network having the universal mailbox of the present invention;
Fig. 3 is a block diagram of the elements of the universal mailbox shown in Fig. 2;
Fig. 4 is a block diagram of the elements of the interface shown in Fig. 3;
Fig. 5 is a block diagram of the elements of the service provider shown in Fig.3;
Fig. 6 is a block diagram of the elements of the message translator shown in Fig. 3;
Fig. 7 is a flowchart of a process for storing a message in the universal mailbox consistent with the principles of the present invention;
Fig. 8 is a flowchart of a process for retrieving a message from the universal mailbox consistent with the principles of the present invention;
Fig. 9 is a flowchart of a process for responding to a retrieved message consistent with the principles of the present invention;
Fig. 10 is a block diagram of an exemplary communications network in another implementation consistent with the present invention;
Fig. 11 is a block diagram of the subscriber equipment shown in Fig. 10;
Fig. 12 is a block diagram of elements of the ADSI server shown in Fig. 10;
Fig. 13 is a block diagram of elements of the interface shown in Fig. 12;
Fig. 14 is a block diagram of elements of the ADSI translator shown in Fig. 12;
Fig. 15 is a flowchart of call processing operations occurring at the ADSI server in an implementation consistent with the present invention; and
Fig. 16 is a flowchart of call processing operations occurring at the subscriber's telecommunications equipment in an implementation consistent with the present invention.

### DETAILED DESCRIPTION

The following detailed description of the invention refers to the accompanying drawings. The same reference numbers in different drawings identify the same or similar elements. Also, the following detailed description does not limit the invention. Instead, the scope of the invention is defined by the appended claims.

In the detailed description that follows, "subscriber" refers to a person that subscribes to the services provided by the systems and methods consistent with the present invention. The subscriber can store messages for other subscribers or retrieve messages that have been left for the subscriber. A "caller," on the other hand, refers to a person who does not subscribe to the services. The caller's actions are limited to leaving messages for subscribers.

Systems and methods in an implementation consistent with the present invention permit subscribers to retrieve and respond to any type of stored message in whatever format the subscribers desire.

Systems and methods in another implementation consistent with the present invention receive messages intended for subscribers, translate the messages to a form compatible with the subscribers' telecommunications equipment, and automatically transfer the messages to the subscribers' telecommunications equipment without requiring that the subscribers initiate the transfer process.

### EXEMPLARY UNIVERSAL MAILBOX SYSTEM

### I. System Elements.

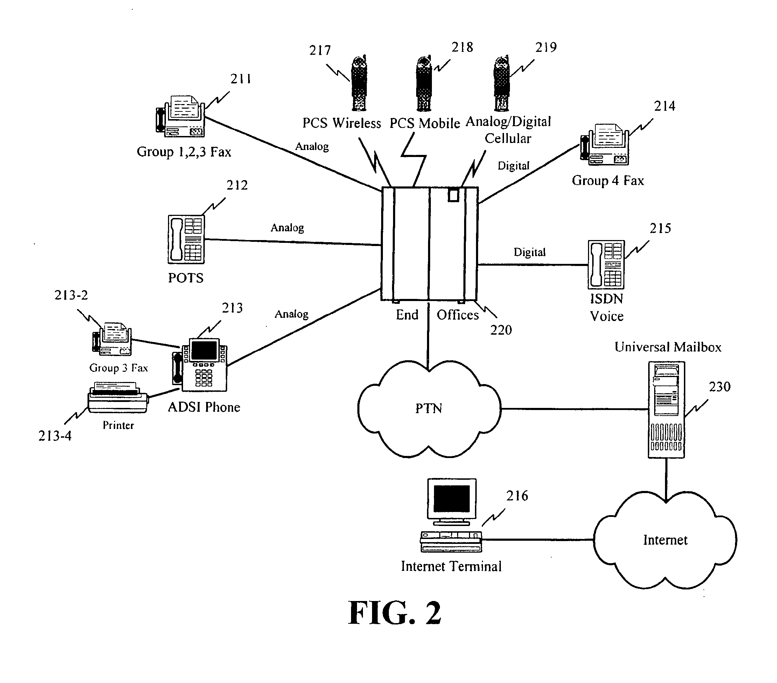

Fig. 2 is a block diagram of an exemplary communications network containing the universal mailbox of the present invention. Subscribers of the universal mailbox service connect to the network via a variety of telecommunications equipment through analog, digital, and Internet lines, and wireless connections. The subscriber equipment includes, but is not limited to, group 1, 2, 3 facsimile machine 211, Plain Old Telephone System (POTS) telephone 212, Analog Display Services Interface (ADSI) telephone 213, group 4 facsimile machine 214, ISDN telephone 215, computer terminal 216, Personal Communications Services (PCS) wireless telephone 217, PCS mobile telephone 218, and analog/digital cellular telephone 219. ADSI telephone 213 might include group 3 facsimile machine 213-2 and printer 213-4 connected thereto.

End offices 220 connect the subscriber equipment, except for Internet terminal 216, to the network. Group 1, 2, 3 facsimile machine 211, POTS telephone 212, and ADSI telephone 213 connect to end offices 220 over conventional analog lines. Group 4 facsimile machine 214 and ISDN telephone 215 connect over conventional digital lines. PCS wireless telephone 217, PCS mobile telephone 218, and analog/digital cellular telephone 219 connect to end offices 220 via conventional wireless connections.

End office 220 connects to universal mailbox 230 by conventional mechanisms over a Public Telecommunications Network (PTN), such as the Public Switched Telephone Network (PSTN). Internet terminal 216, on the other hand, connects to universal mailbox 230 by conventional mechanisms over the Internet. Universal mailbox 230 includes a computer with conventional connections to the PTN and the Internet, and might include a UNIX-capable computer, such as an HP model or the IBM Risc 6000.

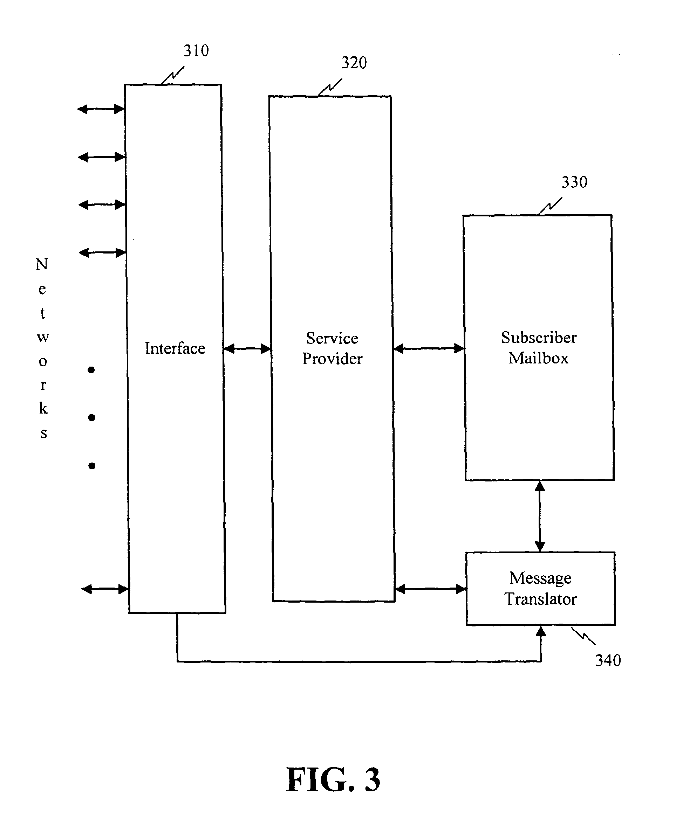

Fig. 3 is a block diagram of the elements of universal mailbox 230. Universal mailbox 230 preferably includes interface 310, service provider 320, subscriber mailbox 330, and message translator 340. Interface 310 connects universal mailbox 230 to various telecommunications networks, including the PTN and the Internet.

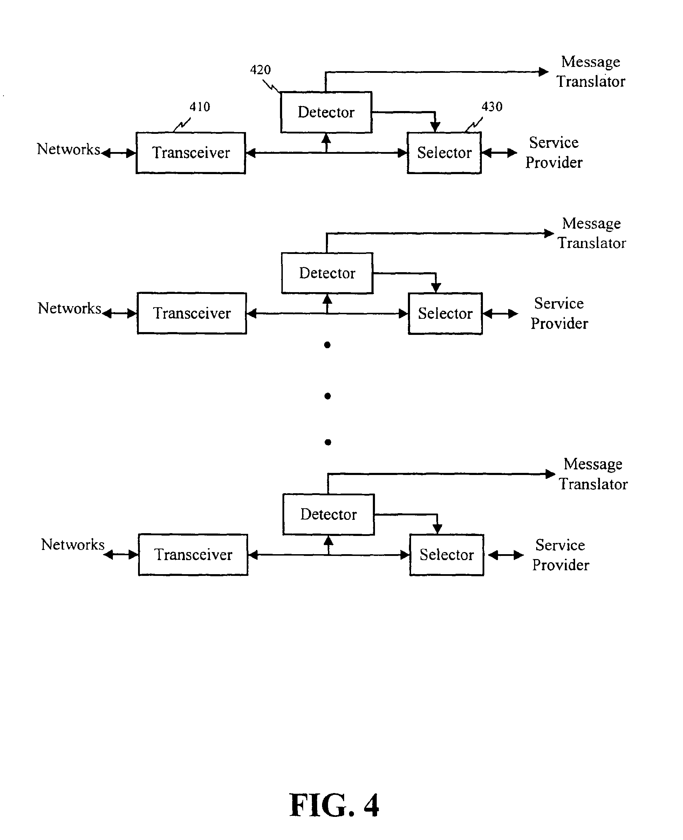

Fig. 4 is a block diagram of the elements of interface 310, including transceivers 410, detectors 420, and selectors 430. Transceivers 410 interface with the various networks, including the PTN and the Internet, and exchange signals with the subscriber equipment to permit subscribers to store, retrieve, and respond to messages in universal mailbox 230, and to permit universal mailbox 230 to notify the subscribers of pending messages awaiting retrieval.

Detectors 420, which preferably include conventional signal line detectors, detect the type of telecommunications equipment a subscriber is using based upon the types of signals received by transceivers 410. Detectors 420 send information indicating the equipment type to message translator 340 and a selection signal to selectors 430.

Selectors 430, which include conventional selectors, such as multiplexers/demultiplexers, route the subscriber signals received by transceivers 410 to service provider 320 using the selection signal from detectors 420, and also route notification signals to the subscribers via transceivers 410.

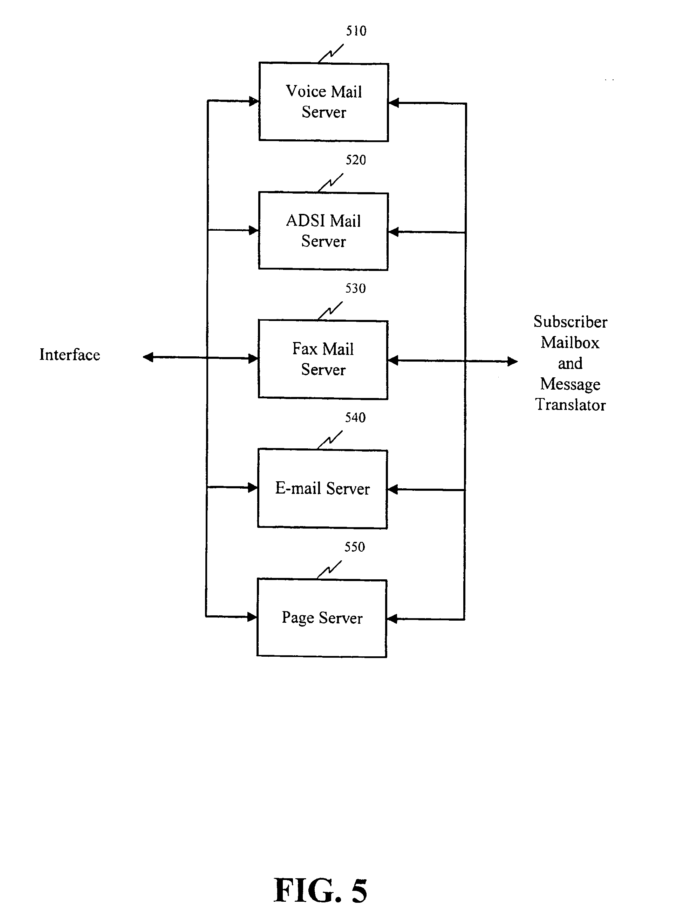

Returning to Fig. 3, service provider 320 connects to interface 310, subscriber mailbox 330. and message translator 340, and provides subscriber services in the various forms as the subscribers require. Fig. 5 is a block diagram of possible elements of service provider 320, including voice mail server 510, ADSI mail server 520, fax mail server 530, e-mail server 540, and page server 550.

Voice mail server 510 provides voice mail services for a subscriber, including the storage and retrieval of voice messages in subscriber mailbox 330. Upon receipt of a voice call, voice mail server 510 detects information regarding the caller, such as calling line identification (CLID) data, from the voice call signal by conventional mechanisms, and stores the caller information along with the voice message in subscriber mailbox 330.

ADSI mail server 520 provides ADSI mail services for the subscriber, including the storage and retrieval of voice, ADSI text, and mixed voice and ADSI text messages in subscriber mailbox 330. Upon receipt of ADSI mail, ADSI mail server 520 detects the caller information from the ADSI mail signal, as described above, and stores the caller information along with the ADSI mail in subscriber 330. Fax mail server 530, e-mail server 540, and page server 550 store and retrieve fax, e-mail, and page messages, respectively, for the subscriber in the same manner set forth above.

In addition to storing and retrieving the various forms of subscriber messages, servers 510 through 550 also notify the subscribers of pending messages in subscriber mailbox 330 that await retrieval. Table 1 shows examples of various forms of subscriber notification based upon the type of telecommunications equipment the subscriber uses to retrieve the pending messages.

**TABLE 1**

| **RETRIEVAL DEVICE** | **POTS Phone** | **ADSI Phone** | **Pager** | **Fax** | **Computer** |
|---|---|---|---|---|---|
| **NOTIFICATION TYPES** | >Phone call | >Phone call | >Deliver the message. | >Deliver the message. | >Audible or visual alert on screen |
| | >Message waiting light | >Message waiting light | | | |
| | >Message waiting tone. | >Message waiting tone | | | >Deliver the message. |
| | | >Display message information on screen | | | |
| | | >Download message to phone (for non-voice messages). | | | |

Returning to Fig. 3, subscriber mailbox 330 preferably includes a large-capacity memory device, such as a disk array, with connections to service provider 320 and message translator 340. Subscriber mailbox 330 stores subscriber messages in the different subscriber formats. The particular formats of a pending stored message might include the format used by the caller or the subscriber leaving the message and the format typically requested by the subscriber, as described below. Subscriber mailbox 330 preferably stores the pending messages in both of these formats.

Subscriber mailbox 330 preferably also stores a database of subscriber profile data. The subscriber profile data includes subscriber-defined information regarding the subscriber's notification preferences. The subscriber profile data might include any of the notification types shown in Table 1, including notifying the subscriber using a message waiting light or tone, or by sending part or all of the message to the subscriber as the notification.

The subscriber profile data could be more specific. The subscriber might associate a notification type with a specific type of telecommunications equipment. For example, the subscriber could designate notification by an ADSI text message when retrieving messages using ADSI phone 213.

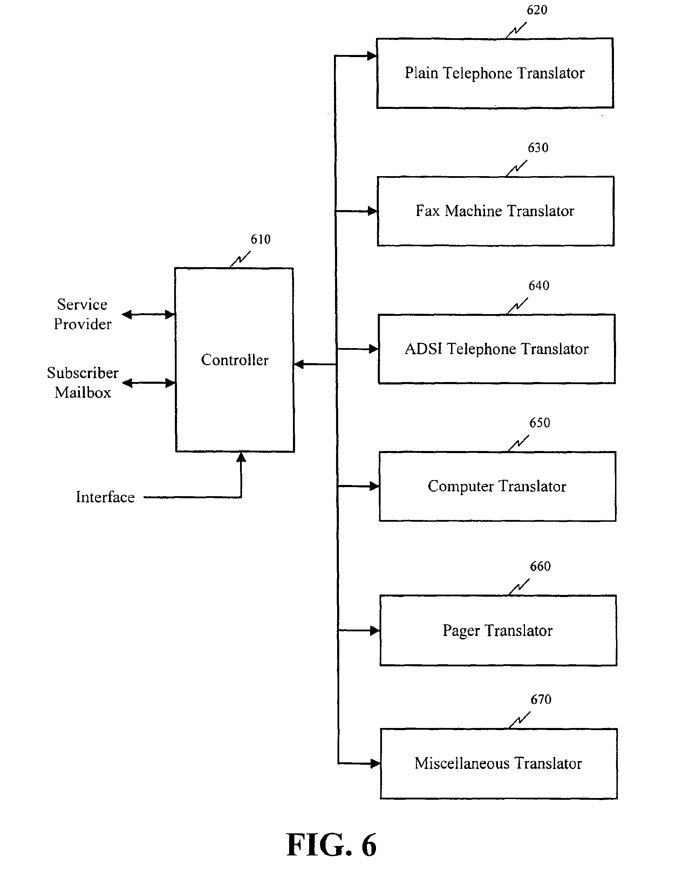

Message translator 340 connects to subscriber mailbox 330, interface 310, and service provider 320, and performs translations between the various subscriber message formats. Fig. 6 is a block diagram of the elements of message translator 340, including controller 610, plain telephone translator 620, fax machine translator 630, ADSI telephone translator 640, computer translator 650, pager translator 660, and miscellaneous translator 670.

Controller 610 preferably includes a standard processor that controls the operation of translators 620 through 670. For each message retrieval, controller 610 records the type of telecommunications equipment the subscriber uses based on the subscriber equipment detected by detectors 420 of interface 310. From the recorded equipment type, controller 610 determines a normal retrieval format for each subscriber. If a subscriber typically retrieves pending messages using POTS telephone 212, for example, controller 610 records the subscriber's normal retrieval format as a voice format. Controller 610 stores the subscriber's normal retrieval format in subscriber mailbox 330.

During idle periods, as the pending messages reside in subscriber mailbox 330, controller 610 retrieves the pending messages from subscriber mailbox 330, translates them from the stored format to the normal retrieval format using one of the translators 620 through 670, and returns the translated messages to subscriber mailbox 330. Translators 620 through 670 execute conventional translation techniques, such as described in U.S. Patent No. 5,497,373 to Hulen et al., to perform translations from the stored format to the subscriber's normal retrieval format. Table 2 shows examples of various translations performed by translators 620 through 670.

**TABLE 2**

| **RETRIEVAL DEVICE** | **POTS Phone** | **ADSI Phone** | **Fax** | **Computer** | **Pager** |
|---|---|---|---|---|---|
| **TRANSLATOR** | | | | | |
| **Plain telephone** | None. | Message information can be provided in ADSI text format. Voice to ADSI text used for hearing impaired service. | Voice to text to Fax graphics, and Message information. | Voice to sound file (and to text for hearing impaired), and message information. | Message information only. |
| **Fax machine** | Fax graphics to text to voice. | Fax graphics to ADSI text. | None. | Fax graphics to computer graphics, and message information. | Message information only. |
| **ADSI telephone** | None for voice. ADSI text to voice. | None. | ADSI text to Fax graphics. | ADSI text to text. | Message information only. |
| **Computer** | Text to voice. | Text to ADSI text. | Text to Fax graphics. | None. | Message information only. |
| **Pager** | Text to voice. | Text to ADSI text. | Text to Fax graphics. | None. | None. |

### II. Call Processing.

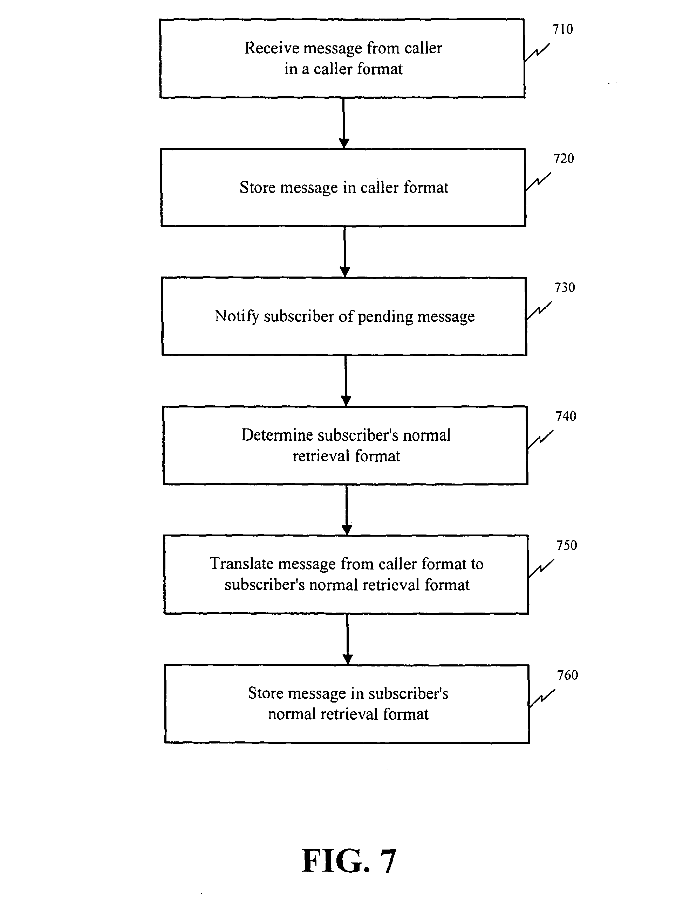

Figs. 7-9 are flowcharts illustrating the operation of the universal mailbox consistent with the principles of the present invention. Fig. 7 is a flowchart of a process for storing a message in universal mailbox 230. The process begins when a caller sends a message to a subscriber in a caller format. The caller format depends upon the type of telecommunications equipment the caller utilizes to send the message.

The caller may send the message to universal mailbox 230 or to the subscriber's telecommunications equipment. The subscriber's telecommunications equipment would then relay the message to universal mailbox 230 by conventional mechanisms, when the subscriber is unavailable to receive the message.

In any event, interface 310 in universal mailbox 230 receives the message from the caller in the caller format [step 710], and forwards it to service provider 320. Service provider 320 analyzes the message to detect information regarding the caller from the message signal, as described above. Service provider 320 then stores the message in subscriber mailbox 330 in the caller format along with the detected caller information [step 720], and notifies the subscriber of the pending message [step 730]. Service provider 320 notifies the subscriber according to the subscriber profile data stored in subscriber mailbox 330. The subscriber notification may include a message waiting light or tone on the subscriber's telephone, or the message itself delivered to the subscriber's ADSI telephone, pager, fax, or computer (Table 1).

Off-line, during idle periods, message translator 340 determines the subscriber's normal retrieval format from the information stored in subscriber mailbox 330 [step 740]. When the caller format differs from the subscriber's normal retrieval format, message translator 340 translates the message from the caller format to the subscriber's normal retrieval format [step 750]. Message translator 340 then stores the message in subscriber mailbox 330 in the subscriber's normal retrieval format [step 760], preferably without erasing the message in the caller format. As a result, subscriber mailbox 330 stores the message in both the caller format and the subscriber's normal retrieval format.

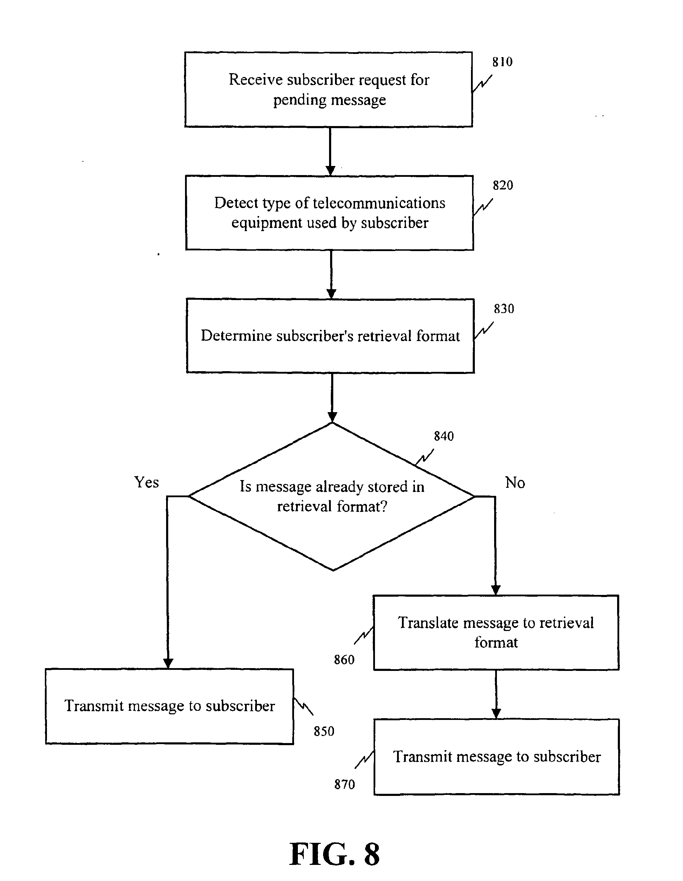

When the subscriber wants to retrieve a pending message, the process shown by the flowchart in Fig. 8 occurs. The subscriber establishes a connection between the subscriber's telecommunications equipment and universal mailbox 230 to request retrieval of the pending message. The subscriber might accomplish this by dialing universal mailbox 230's telephone number, or by configuring the subscriber's telecommunications equipment to automatically establish the connection.

Interface 310 of universal mailbox 230 receives the subscriber's request for retrieval of the pending message [step 810], and detects the type of telecommunications equipment the subscriber used to make the request [step 820]. Because some types of telecommunications equipment permit the subscriber to retrieve the pending message in more than one form, the subscriber must specify the desired retrieval form when using these types of telecommunications equipment. For example, if the subscriber uses ADSI telephone 213 to retrieve the pending message, the subscriber must specify whether the pending message should be downloaded in voice or ADSI text form.

Interface 310 then routes the request to service provider 320. Based on the detected type of subscriber telecommunications equipment and any subscriber specified retrieval format, service provider 320 determines the subscriber's retrieval format [step 830]. Service provider 320 reads the pending message from subscriber mailbox 330 and determines whether the message is already in the retrieval format [step 840]. The message would already be in the retrieval format if the retrieval format is the same as the caller format or the subscriber's normal retrieval format. If the message is already in the retrieval format, then service provider 320 sends the message to the subscriber [step 850].

If the message is not already in the retrieval format, service provider 320 notifies message translator 340. Message translator 340 reads the message from subscriber mailbox 330 and translates the message to the retrieval format [step 860]. After translation, message translator 340 gives the message to service provider 320. Service provider 320, in turn, sends the message to the subscriber in the retrieval format [step 870].

If the subscriber wants to respond to the retrieved message, the subscriber must first determine what form the response should take. Table 3 shows examples of various responses permitted by some types of telecommunications equipment.

**TABLE 3**

| **RETRIEVAL DEVICE** | **POTS Phone** | **ADSI Phone** | **Pager** | **Fax** | **Computer** |
|---|---|---|---|---|---|
| **RESPONSE TYPES** | >Phone call. | >Phone call | >Message information. | >Phone call | >E-mail |
| | | >Text message. | | >Fax. | >E-mail with voice file attachment. |

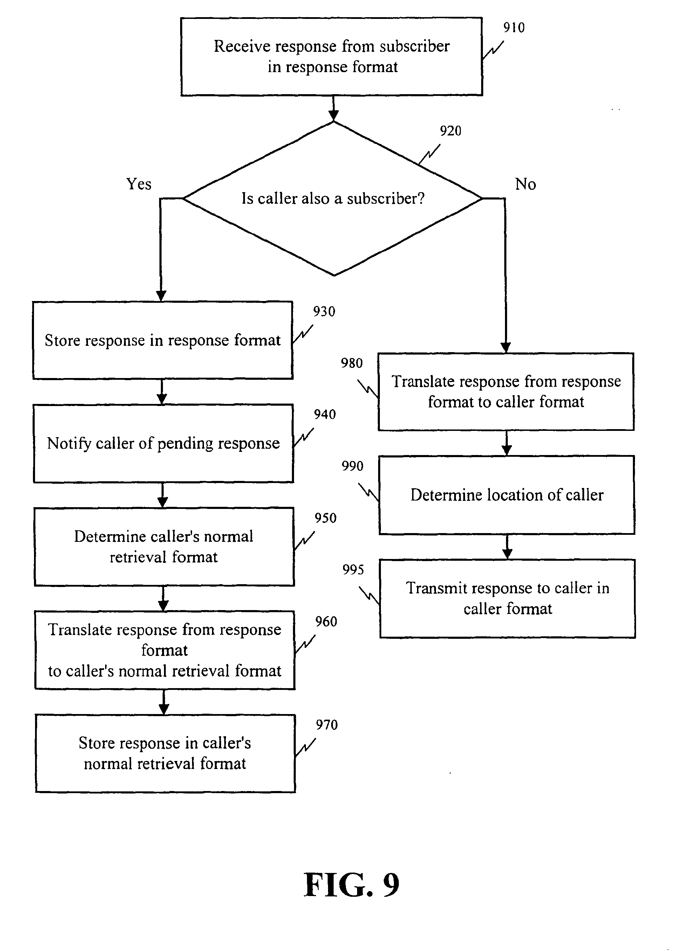

Once the subscriber determines what form the response will take, the process shown by the flowchart in Fig. 9 occurs. The subscriber generates a response for the caller and sends it to universal mailbox 230. Interface 310 receives the response from the subscriber in the response format [step 910], and forwards it to service provider 320. The response format may differ from both the caller format and the retrieval format.

Upon receipt of the response, service provider 320 determines whether the caller is also a subscriber to the universal mailbox services by checking for the caller's identity in subscriber mailbox 330 [step 920]. If the caller is a subscriber, service provider 320 stores the response in subscriber mailbox 330 in the response format [step 930], and notifies the caller of the pending response, in the manner described above [step 940].

Off-line, during idle periods, message translator 340 determines the caller's normal retrieval format from the information stored in subscriber mailbox 330 [step 950]. When the response format differs from the caller's normal retrieval format, message translator 340 translates the response from the response format to the caller's normal retrieval format [step 960]. Message translator 340 then stores the response in the caller's normal retrieval format in subscriber mailbox 330 [step 970].

If the caller is not also a subscriber, service provider 320 notifies message translator 340 to translate the response to the caller format, the same format as the original message sent by the caller [step 980]. After translating the response, message translator 340 returns it to service provider 320. Service provider then determines the location of the caller, including the caller's e-mail address, telephone number, or fax number, from the caller information stored in subscriber mailbox 330 [step 990]. Alternatively, service provider 320 could obtain the caller's location from the subscriber. Service provider 320 might obtain the caller's location from the subscriber when the caller information would not direct the response to the caller's correct location, for example, when the caller originally sent the message from public telecommunications equipment.

Once service provider 320 obtains the caller's correct location, service provider 320 transmits the response to the caller in the caller format [step 995]. This transmission might take the form of a telephone call, a fax, an e-mail, or a page to the caller.

Tables 1 through 3 show types of notification, translators, and responses, respectively, corresponding to various types of telecommunications equipment. These were presented as examples only and would obviously include other types of notification, translators, responses, and telecommunications equipment, taking advantage of new advancements in the art, as well as the development of new types of telecommunications equipment.

Furthermore, the subscriber has been described as responding to a retrieved message using the same telecommunications equipment used to retrieve the message. This need not be the case, however. The universal mailbox consistent with the principles of the present invention permits a subscriber to respond to a pending message using a different type of telecommunications equipment than was used to retrieve the message without requiring the subscriber to retrieve the message a second time. The subscriber need only record the reference number associated with the retrieved message to inform the universal mailbox of the identity of the message to which the subscriber subsequently responds.

### EXEMPLARY SYSTEM WITH AUTOMATIC MESSAGE DELIVERY

### I. System Elements.

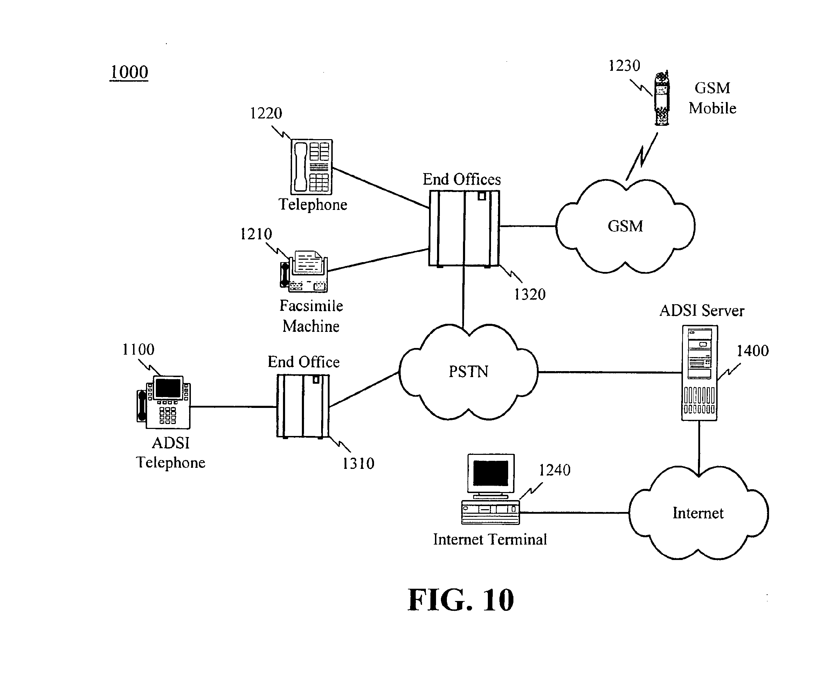

Fig. 10 is a block diagram of communications network 1000 in another implementation consistent with the principles of the present invention. A subscriber using, for example, ADSI telephone 1100 receives messages from callers using different types of telecommunications equipment. The caller telecommunications equipment might include group 1, 2, 3, or 4 facsimile machine 1210, POTS or ISDN telephone 1220, Global System for Mobile Communications (GSM) mobile unit 1230, and Internet terminal 1240.

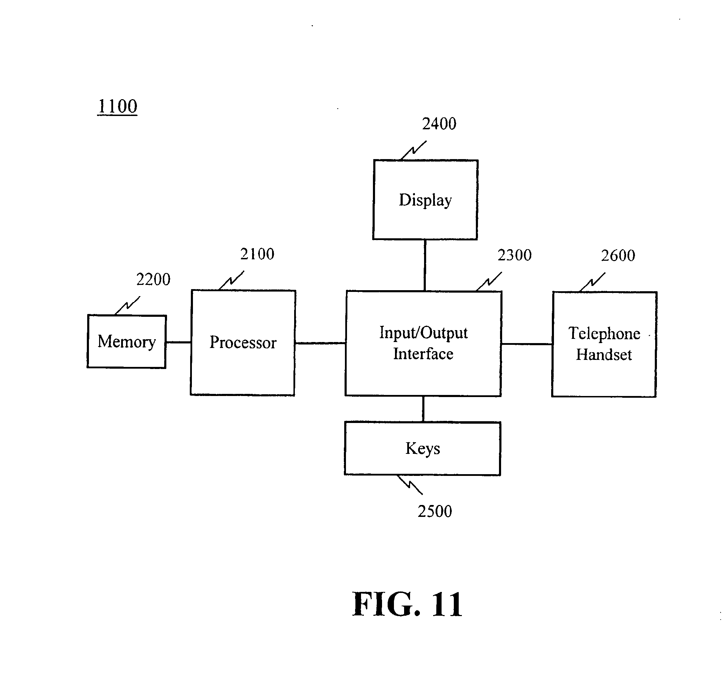

Fig. 11 is a block diagram of ADSI telephone 1100, which includes processor 2100, memory 2200, input/output interface 2300, display 2400, keys 2500, and telephone handset 2600. Processor 2100 is a standard microprocessor that controls operation of ADSI telephone 1100, including the processing of incoming voice calls and text messages. Memory 2200 is a conventional memory device, such as a RAM, that stores incoming voice and text messages.

Input/output interface 2300 connects processor 2100 to input and output devices, such as display 2400, keys 2500, and telephone handset 2600. Display 2400 is a conventional flat screen display, such as an LCD display, that displays information to the subscriber. Keys 2500 include several function keys and regular telephone alphanumeric keys to permit the subscriber to input information and dial telephone numbers. Telephone handset 2600 is a conventional telephone handset that permits the subscriber to make and receive voice calls.

Returning to Fig. 10, end offices 1310 and 1320 connect the subscriber and caller telecommunications equipment, except for Internet terminal 1240, to network 1000. ADSI telephone 1100, group 1, 2, 3 facsimile machine 1210, and POTS telephone 1220 connect to end offices 1310 and 1320 over conventional analog lines. Group 4 facsimile machine 1210 and ISDN telephone 1220 connect over conventional digital lines. GSM mobile unit 1230 connects to end offices 1320 via a GSM network.

End offices 1310 and 1320 are standard Private Branch Exchanges (PBXs) or Class 5 telephone switches that connect to ADSI server 1400 by conventional mechanisms over a public voice network, such as the PSTN. Internet terminal 1240, on the other hand, connects to ADSI server 1400 by conventional mechanisms over a data network, such as the Internet.

ADSI server 1400 includes a computer with conventional connections to various telecommunications networks, such as the PSTN and the Internet, and might include a UNIX-capable computer, such as an HP model or the IBM Rise 6000. ADSI server 1400 translates messages from the callers and presents the translated messages to the subscribers' telecommunications equipment.

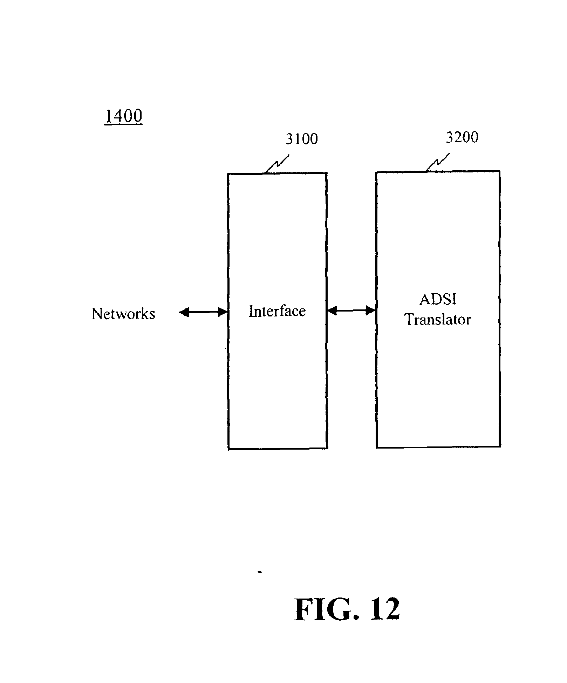

Fig. 12 is a block diagram of elements of ADSI server 1400 consistent with the principles of the present invention. ADSI server 1400 preferably includes interface 3100 and ADSI translator 3200. Interface 3100 connects ADSI server 1400 to various telecommunications networks, including the PSTN and the Internet.

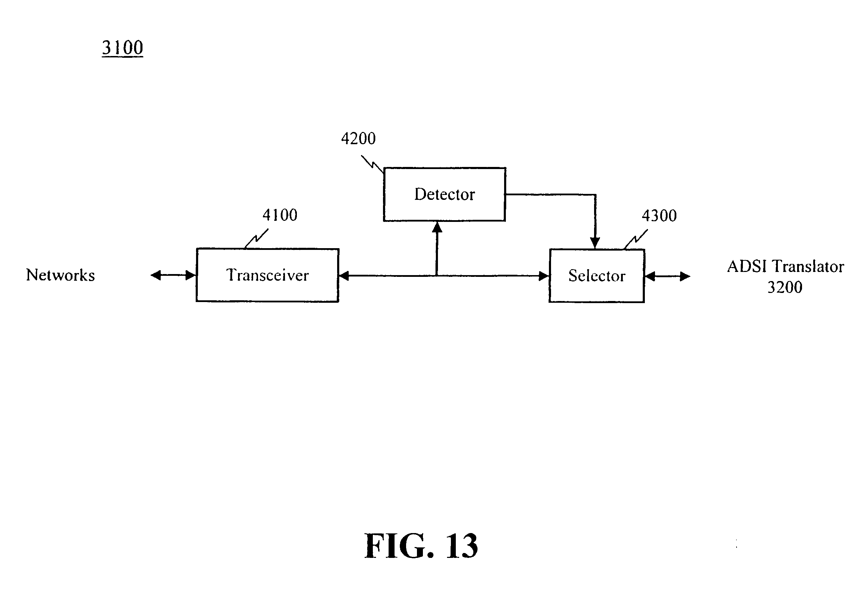

Fig. 13 is a block diagram of elements of interface 3100, including transceiver 4100, detector 4200, and selector 4300. While Fig. 13 shows only a single transceiver, detector, and selector, interface 3100 actually includes several of these elements for concurrently handling messages from several different callers.

Transceiver 4100 interfaces with the various networks, including the PSTN and the Internet, and exchanges signals with the subscribers' and callers' telecommunications equipment to permit callers to transmit messages to ADSI server 1400, and to permit ADSI server 1400 to forward these messages to the subscribers' telecommunications equipment.

Detector 4200, which preferably includes a conventional signal line detector, detects the type of telecommunications equipment a caller uses based on the type of signal received by transceiver 4100. Detector 4200 sends information indicating the equipment type as a selection signal to selector 4300.

Selector 4300, which includes a conventional selector such as a multiplexer/demultiplexer, routes the caller signals received by transceiver 4100 to ADSI translator 3200 using the selection signal from detector 4200. Selector 4300 also routes messages to the subscribers via transceiver 4100.

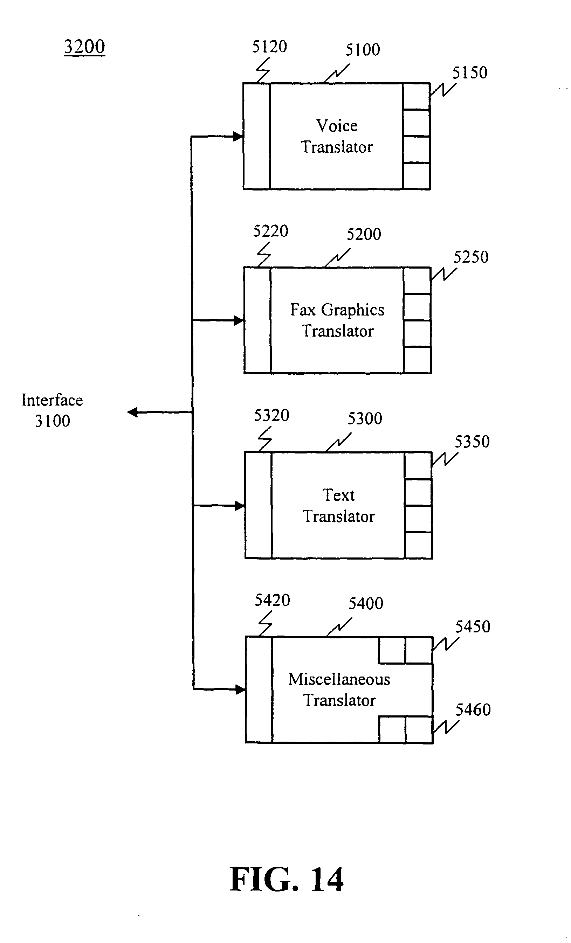

Returning to Fig. 12, ADSI translator 3200 connects to interface 3100 and performs message translations from the formats used by the callers' telecommunications equipment to the format compatible with the subscribers' telecommunications equipment, or the ADSI text format, according to the implementation shown in Fig. 10. Fig. 14 is a block diagram of ADSI translator 3200, including voice translator 5100, fax graphics translator 5200, text translator 5300, and miscellaneous translator 5400.

Voice translator 5100 includes controller 5120 and several voice translation units 5150 that translate voice messages to ADSI text format. Upon receipt of a voice call, controller 5120 detects information regarding the caller, such as calling line identification (CLID) data, from the voice call signal by conventional mechanisms, and records the voice message. Controller 5120 then selects one of the voice translation units 5150 to translate the voice message to ADSI text format. The selected voice translation unit 5150 can use conventional translation software to perform this translation.

When the selected voice translation unit 5150 finishes translating the voice message, controller 5120 generates an ADSI text message including the caller information and the translated voice message. Controller 5120 then sends the ADSI text message to interface 3100 for routing to the subscribers' telecommunications equipment.

Fax graphics translator 5200 includes controller 5220 and several fax graphics translation units 5250 that translate fax graphics of fax transmissions to ADSI text format. Upon receipt of a fax transmission, controller 5220 detects information regarding the caller, such as CLID data, from the fax transmission signal by conventional mechanisms, and stores the fax. Controller 5220 then selects one of the fax graphics translation units 5250 to translate fax graphics of the fax to ADSI text format. The selected fax graphics translation unit 5250 can use conventional translation software to perform this translation.

When the selected fax graphics translation unit 5250 finishes translating the fax, controller 5220 generates an ADSI text message including the caller information and the translated fax. Controller 5220 then sends the ADSI text message to interface 3100 for routing to the subscribers' telecommunications equipment.

Similar to voice and fax graphics translators 5100 and 5200, text translator 5300 includes controller 5320 and several text translation units 5350 that translate text messages to ADSI text format. Upon receipt of an e-mail, page, or Short Messaging Service (SMS) message, controller 5320 detects information regarding the caller by conventional mechanisms, and stores the message. Controller 5320 then selects one of the text translation units 5350 to translate the message to ADSI text format. The selected text translation unit 5350 can use conventional translation software to perform this translation.

When the selected text translation unit 5350 finishes translating the message, controller 5320 generates an ADSI text message including the caller information and the translated message. Controller 5320 then sends the ADSI text message to interface 3100 for routing to the subscribers' telecommunications equipment.

Miscellaneous translator 5400 includes controller 5420 and backup translation units 5450 or supplementary translation units 5460 for increased message traffic. Miscellaneous translator 5400 might, additionally or alternatively, include translation units for translating from formats not specifically mentioned herein.

Translators 5100-5400 might also include queuing mechanisms that buffer messages awaiting translation or translated messages waiting to be transferred to the subscribers' telecommunications equipment. In this case, the controllers could buffer translated messages and route them to subscribers' telecommunications equipment after a predetermined period of time or during idle periods.

### II. Call Processing.

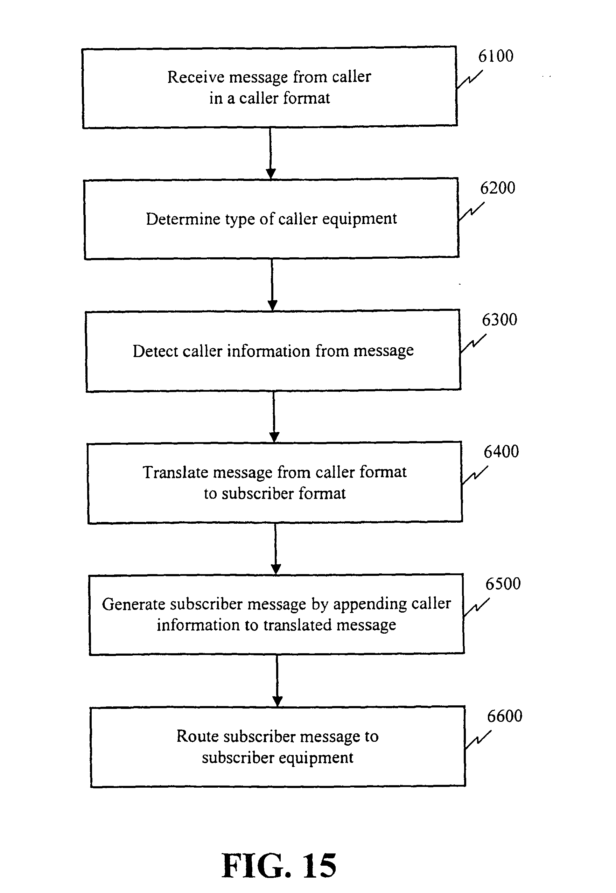

Fig. 15 is a flowchart of call processing operations occurring at ADSI server 1400 (Fig. 12) in an implementation consistent with the principles of the present invention. The call processing operations begin when a caller dials or enters a telephone number for sending a message to a subscriber. The caller dials a telephone number corresponding to ADSI server 1400 or corresponding to the subscriber's telecommunications equipment. When the caller dials the telephone number of the subscriber's telecommunications equipment, the subscriber's telecommunications equipment relays the call to ADSI server 1400 by conventional mechanisms when the subscriber is unavailable to receive the call.

The caller interacts with ADSI server 1400 to identify the subscriber to which the caller desires to send a message. The caller then sends the message in a format dependent upon the type of telecommunications equipment the caller uses to send the message. Interface 3100 in ADSI server 1400 receives the message from the caller in the caller format [step 6100].

Interface 3100 determines the type of telecommunications equipment the caller uses from the type of signal received with the message [step 6200]. Based on the caller's telecommunications equipment type, interface 3100 sends the message to the appropriate translator within ADSI translator 3200. For example, if interface 3100 determines that the caller is using a facsimile machine, interface 3100 sends the message to fax graphics translator 5200 (Fig. 14) within ADSI translator 3200.

Controller 5220 within fax graphics translator 5200 analyzes the message to detect information regarding the caller from the message signal, as described above [step 6300]. Controller 5220 then either queues the message until a fax graphics translation unit 5250 becomes available or selects an available fax graphics translation unit to translate the message.

Eventually, one of the fax graphics translation units 5250 translates the message to ADSI text format [step 6400]. Controller 5220 appends the caller information to the translated message and generates an ADSI text message from the translated message [step 6500]. Controller 5220 then sends the ADSI text message to interface 3100.

Interface 3100 routes the ADSI text message to the appropriate subscriber over the PSTN [step 6600]. For example, interface 3100 might accomplish the routing by dialing the telephone number associated with the subscriber's ADSI telephone 1100 (Fig. 10), and attaching a suppressed ringing signal. In this way, interface 3100 transfers the message to ADSI telephone 1100 without any ringing tone to notify the subscriber audibly.

ADSI server 1400 might also permit callers to attach priority status to their messages, or permit subscribers to prioritize messages by designating messages from particular callers as high priority messages. In such a case, ADSI server 1400 might attach suppressed ringing signals to low priority messages transferred to the subscriber's telecommunications equipment. For high priority messages, however, ADSI server 1400 might send the messages without attaching suppressed ringing signals so that the subscriber can be notified immediately of the transferred high priority messages.

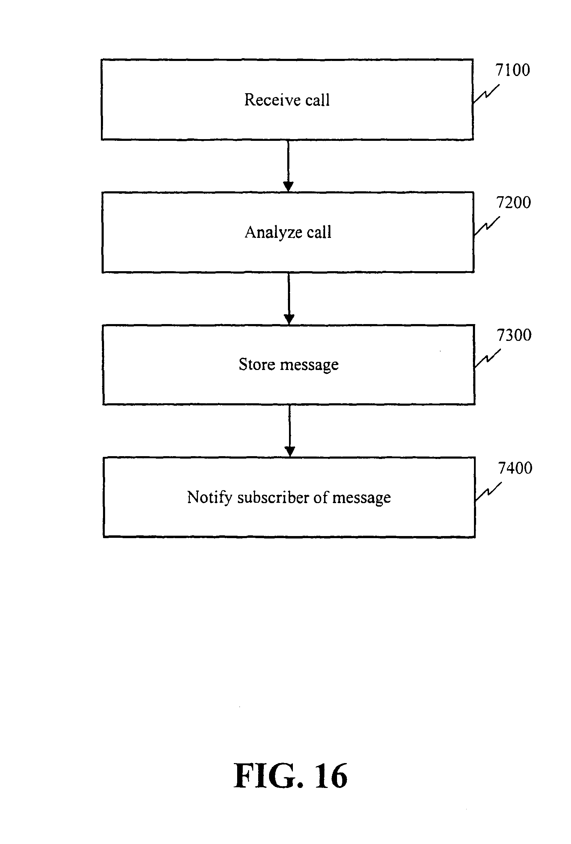

Fig. 16 is a flowchart of call processing operations occurring at the subscriber's telecommunications equipment in an implementation consistent with the principles of the present invention. When a call is received by ADSI telephone 1100 (Fig. 11) [step 7100], processor 2100 analyzes data accompanying the call to determine the presence of a suppressed ringing signal [step 7200]. Processor 2100 might use such a determination to distinguish received telephone calls from received text messages.

After the data analysis, processor 2100 stores any message accompanying the call in memory 2200 [step 7300]. If the call is a telephone call, the accompanying message might be the identity of the caller, such as CLID data. Otherwise, the call is a transferred message.

Processor 2100 then notifies the subscriber of the message [step 7400]. Processor 2100 might perform the notification using one of several audio or visual mechanisms, such as by turning on or flashing a light, by displaying a message such as "YOU HAVE A MESSAGE" on display 2400, by displaying the message itself, or by presenting an audible ringing tone. For example, based on the data analysis, processor 2100 might find no suppressed ringing signal accompanying the call, and may then notify the subscriber of the incoming call or message with an audible ringing tone.

Processor 2100 executes a simple software program to permit the subscriber to tailor the handling of messages as desired. Using keys 2500, the subscriber might configure the ADSI telephone 1100 to screen particular messages or messages from certain or unrecognized parties, or to forward particular messages to another location. The subscriber might also configure ADSI telephone 1100 to provide a particular type of message notification, such as a ringing tone, a visual display, or no notification at all.

While one implementation consistent with the principles of the present invention has described the subscriber telecommunications equipment as an ADSI telephone and the network server as an ADSI server, this need not be the case. In other implementations consistent with the present invention, the subscriber uses different types of telecommunications equipment capable of receiving text messages. For example, the subscriber equipment may be a GSM mobile unit. In this case, the communications network would include a GSM mobile server that would translate messages from the different caller formats to SMS messages for transmission to the GSM mobile unit.

In still other implementations, the subscriber equipment may include an Internet terminal or a facsimile machine. In these cases, a communications network consistent with the present invention might include an Internet server or a fax server to translate messages from the different caller formats to e-mail or fax graphics messages, respectively, for transmission to the Internet terminal or the facsimile machine.

In yet another implementation, the subscriber equipment might include a combination of one or more of the previously described telecommunications equipment. In this case, the communications network would include a server resembling the universal mailbox described above. The universal mailbox would record subscriber profile data that identifies the type of telecommunications equipment used by the subscriber. Using the subscriber profile data, the universal mailbox would translate messages from the different caller formats to a format compatible with the type of telecommunications equipment used by the subscriber, as identified by the subscriber's profile data.

In any of the implementations described above, call processing at the respective server and at the subscriber's telecommunications equipment would be similar to the call processing operations described above with respect to Figs. 15 and 16.

While the systems and methods in this implementation consistent with the present invention have been described as including a server that automatically transfers messages to subscriber equipment. These systems and methods are equally applicable to subscriber equipment that automatically retrieves messages from a server without the aid of the subscriber. Such subscriber equipment would periodically call the server to retrieve messages pending for the subscriber, and would retrieve these messages without intervention by the subscriber. In this case, a universal mailbox similar to the one described above would be desirable as the server.

### CONCLUSION

The universal mailbox in an implementation consistent with the present invention permits subscribers to retrieve and respond to messages in any format, independent of the formats used to store, retrieve, and respond to the messages. Furthermore, systems and methods in another implementation consistent with the present invention automatically transfer messages to a subscriber's telecommunications equipment in a format compatible with that equipment without requiring the subscriber to initiate the process.

The foregoing description of preferred embodiments of the present invention provides illustrations and descriptions, but is not intended to be exhaustive nor limit the invention to the precise form disclosed. Modifications and variations are possible in light of the above teachings or may be acquired from practice of the invention. The scope of the invention is defined by the claims and their equivalents.

## Claims

1. A server (400) in a telecommunications network comprising:
means for receiving information intended for a subscriber from a caller in a caller format, the server (400) comprising
means (340) for translating the information to a subscriber format compatible with equipment of the subscriber (212,219); and the server being **characterised by**
means for automatically transferring the translated information to the subscriber equipment independent of any action by the subscriber wherein the transferring means includes:
means for sending suppressed ringing signals with the translated information to the subscriber equipment.

2. The server (1400) of claim 1, wherein the receiving means includes:
means for detecting signals from the caller, and
means for determining the caller format from the detected signals.

3. The server (1400) of claim 1, wherein the receiving means includes:
means for detecting caller data, and
means for identifying the caller based on the detected caller data.

4. The server (1400) of claim 3, wherein the translating means includes:
means for generating a subscriber message from the detected caller data and the translated information.

5. The server (1400) of claim 4, wherein the transferring means includes:
means for transmitting the subscriber message for display on the subscriber equipment (212-219).

6. The server (1400) of claim 1 wherein the receiving means includes:
means for prioritizing the received information; and
wherein the transferring means further includes:
means for transmitting suppressed ringing signals to the subscriber equipment when the prioritizing means prioritizes the received information as a predetermined type of priority information.

7. The server (1400) of claim 1, further comprising:
means for storing subscriber profile data indicating a type of the subscriber equipment.

8. The server (1400) of claim 7, wherein the translating means includes:
means (340) for translating the information to a subscriber format compatible with the subscriber equipment type indicated in the stored subscriber profile data.

9. The server (1400) of claim 1, wherein the transferring means includes:
means for receiving periodic polling requests from the subscriber equipment (212-219), and
means for sending the translated information to the subscriber equipment (212-219) in response to the polling requests.

10. A method for automatically transferring information to subscriber equipment (212-219), comprising the steps of:
receiving information intended for a subscriber from a caller in a caller format, the method comprising the steps of
translating the information to a subscriber format compatible with the subscriber equipment (212-219); and the method being **characterised by** the steps of
automatically transferring the translated information to the subscriber equipment (212-219) independent of any action by the subscriber, wherein the transferring step includes the substep of:
sending suppressed ringing signals with the translated information to the subscriber equipment (212-219).

11. The method of claim 10, wherein the receiving step includes the substeps of:
detecting signals from the caller, and
determining the caller format from the detected signals.

12. The method of claim 10, wherein the receiving step includes the substeps of:
detecting caller data, and
identifying the caller based on the detected caller data.

13. The method of claim 12, wherein the translating step includes the substep of
generating a subscriber message from the detected caller data and the translated information.

14. The method of claim 13, wherein the transferring step includes the substep of:
transmitting the subscriber message for display on the subscriber equipment (212-219).

15. The method of claim 10, wherein the receiving step includes the substep of:
prioritizing the received information; and
wherein the transferring step further includes the substep of:
transmitting suppressed ringing signals to the subscriber equipment (212-219) when the received information is prioritized as a predetermined type of priority information.

16. The method of claim 10, further comprising the step of:
storing subscriber profile data indicating a type of the subscriber equipment (212-219).

17. The method of claim 16, wherein the translating step includes the substep of:
translating the information to a subscriber format compatible with the subscriber equipment type indicated in the stored subscriber profile data.

18. The method of claim 10, wherein the transferring step includes the substeps of:
receiving periodic polling requests from the subscriber equipment (212-219), and
sending the translated information to the subscriber equipment (212-219) in response to the polling requests.

## Patentansprüche

1. Server (400) in einem Telekommunikations-Netzwerk, mit:
Einrichtungen zum Empfang von für einen Teilnehmer bestimmter Information von einem Anrufer in einem Anrufer-Format, wobei der Server (400)
Einrichtungen (340) zur Umsetzung der Information in ein Teilnehmer-Format umfasst, das mit Ausrüstungen des Teilnehmers (212, 219) kompatibel ist, und wobei der Server **gekennzeichnet ist durch**:
Einrichtungen zur automatischen Überführung der umgesetzten Information an die Teilnehmer-Ausrüstung unabhängig von irgendeiner Aktion **durch** den Teilnehmer, wobei die Überführungseinrichtung:
Einrichtungen zum Senden unterdrückter Rufton-Signale mit der umgesetzten Information an die Teilnehmer-Ausrüstung einschließt.

2. Server (1400) nach Anspruch 1, bei dem die Empfangseinrichtung:
Einrichtungen zur Detektion von Signalen von dem Anrufer, und
Einrichtungen zur Feststellung des Anrufer-Formates aus den detektierten Signalen einschließt.

3. Server (1400) nach Anspruch 1, bei dem die Empfangseinrichtung:
Einrichtungen zur Detektion von Anrufer-Daten, und
Einrichtungen zur Identifikation des Anrufers auf der Grundlage der detektierten Anrufer-Daten einschließt.

4. Server (1400) nach Anspruch 3, bei dem die Umsetzungseinrichtung:
Einrichtungen zur Erzeugung einer Teilnehmer-Mitteilung aus den detektierten Anrufer-Daten und der umgesetzten Information einschließt.

5. Server (1400) nach Anspruch 4, bei der die Üherführungseinrichtung:
Einrichtungen zum Senden der Teilnehmer-Mitteilung zur Anzeige auf der Teilnehmer-Ausrüstung (212-219) einschließt.

6. Server (1400) nach Anspruch 1, bei dem die Empfangseinrichtung:
Einrichtungen zur Zuordnung einer Priorität zu der empfangenen Information einschließt; und
wobei die Überführungseinrichtungen weiterhin:
Einrichtungen zum Senden unterdrückter Rufton-Signale an die Teilnehmer-Ausrüstung einschließt, wenn die Prioritats-Zuordnungseinrichtung der empfangenen Information einen vorgegebenen Typ der Prioritätsinformation zuordnet.

7. Server (1400) nach Anspruch 1, der weiterhin:
Einrichtungen zum Speichern von Teilnehmer-Profildaten umfasst, die einen Typ der Teilnehmer-Ausrüstung anzeigen.

8. Server (1400) nach Anspruch 7, bei dem die Umsetzungseinrichtung:
Einrichtungen (340) zum Umsetzen der Information auf ein Teilnehmer-Format einschließt, das mit dem Teilnehmer-Ausrüstungs-Typ kompatibel ist, der in den gespeicherten Teilnehmer-Profildaten angezeigt ist.

9. Server (1400) nach Anspruch 1, bei dem die Überführungseinrichtung:
Einrichtungen zum Empfang periodischer Abfrage-Anforderungen von der Teilnehmer-Ausrüstung (212-219), und
Einrichtungen zum Senden der umgesetzten Information an die Teilnehmer-Ausrüstung (212-219) als Antwort auf die Abfrage-Anforderungen einschließt.

10. Verfahren zur automatischen Überführung von Information an eine Teilnehmer-Ausrüstung (212-219), mit den folgenden Schritten:
Empfangen von für einen Teilnehmer bestimmter Information von einem Anrufer in einem Anrufer-Format, wobei das Verfahren die Schritte der:
Umsetzung der Information in ein Teilnehmer-Format umfasst, das mit der Teilnehmer-Ausrüstung (212-219) kompatibel ist; und
wobei das Verfahren durch die folgenden Schritte **gekennzeichnet** ist:
automatisches Überführen der umgesetzten Information an die Teilnehmer-Ausrüstung (212-219) unabhängig von irgendeiner Aktion durch den Teilnehmer, wobei der Überführungsschritt den Teilschritt des:
Sendens unterdrückter Rufton-Signale mit der umgesetzten Information an die Teilnehmer-Ausrüstung (212-219) einschließt.

11. Verfahren nach Anspruch 10, bei dem der Empfangsschritt die Teilschritte des:
Detektierens von Signalen von dem Anrufer; und
Bestimmens des Anrufer-Formats aus den detektierten Signalen einschließt.

12. Verfahren nach Anspruch 10, bei dem der Empfangsschritt die Teilschritte der:
Detektion von Anrufer-Daten; und
der Identifikation des Anrufers auf der Grundlage der detektierten Anrufer-Daten einschließt.

13. Verfahren nach Anspruch 12, bei dem der Umsetzungsschritt den Teilschritt der:
Erzeugung einer Teilnehmer-Mitteilung aus den detektierten Anrufer-Daten und der umgesetzten Information einschließt.

14. Verfahren nach Anspruch 13, bei dem der Überführungsschritt den Teilschritt des:
Sendens der Teilnehmer-Mitteilung zur Anzeige auf der Teilnehmer-Ausrüstung (212-219) einschließt.

15. Verfahren nach Anspruch 10, bei dem der Empfangsschritt den Teilschritt der:
Zuordnung einer Priorität zu der empfangenen Information einschließt; und
wobei der Überführungsschritt weiterhin den Teilschritt des:
Sendens unter der Rufton-Signale an die Teilnehmer-Ausrüstung (212-219) einschließt, wenn der empfangenen Information ein vorgegebener Typ der Prioritätsinformation zugeordnet ist.

16. Verfahren nach Anspruch 10, das weiterhin den Schritt des:
Speicherns von Teilnehmer-Profildaten einschließt, die einen Typ der Teilnehmer-Ausrüstung (212-219) anzeigen.

17. Verfahren nach Anspruch 16, bei dem der Umsetzungsschritt den Teilschritt des:
Umsetzens der Information auf ein Teilnehmer-Format einschließt, das mit dem Teilnehmer-Ausrüstungs-Typ kompatibel ist, der in den gespeicherten Teilnehmer-Profildaten angezeigt ist.

18. Verfahren nach Anspruch 10, bei dem der Überführungsschritt die Teilschritte des:
Empfangens periodischer Abfrage-Anforderungen von der Teilnehmer-Ausrüstung (212-219), und
des Sendens der umgesetzten Information an die Teilnehmer-Ausrüstung (212-219) als Antwort auf die Abfrage-Anforderungen einschließt.

## Revendications

1. Serveur (400) dans un réseau de télécommunications comprenant :
des moyens permettant de recevoir des informations destinées à un abonné provenant d'un appelant dans un format d'appelant, le serveur (400) comprenant
des moyens (340) permettant de traduire les informations dans un format d'abonné compatible avec un équipement de l'abonné (212, 219) ; et le serveur étant **caractérisé en ce que**
des moyens permettant de transférer automatiquement les informations traduites à l'équipement d'abonné indépendamment de n'importe quelle action de l'abonné dans lequel les moyens de transfert comprennent :
des moyens permettant d'envoyer des signaux de sonnerie supprimés avec les informations traduites à l'équipement d'abonné.

2. Serveur (1400) selon la revendication 1, dans lequel les moyens de réception comprennent :
des moyens permettant de détecter des signaux provenant de l'appelant, et
des moyens permettant de déterminer le format de l'appelant à partir des signaux détectés.

3. Serveur (1400) selon la revendication 1, dans lequel les moyens de réception comprennent :
des moyens permettant de détecter des données de l'appelant, et
des moyens permettant d'identifier l'appelant sur la base de données détectées de l'appelant.

4. Serveur (1400) selon la revendication 3, dans lequel les moyens de traduction comprennent:
des moyens permettant de générer un message d'abonné à partir des données détectées de l'appelant et les informations traduites.

5. Serveur (1400) selon la revendication 4, dans lequel les moyens de transfert comprennent :
des moyens permettant d'émettre le message d'abonné afin qu'il soit affiché sur l'équipement d'abonné (212-219).

6. Serveur (1400) selon la revendication 1 dans lequel les moyens de réception comprennent :
des moyens permettant de classer par priorité les informations reçues ; et
dans lequel les moyens de transfert comprennent en outre:
des moyens permettant d'émettre des signaux supprimés de sonnerie à l'équipement d'abonné quand les moyens de classement par priorités classent par priorité les informations reçues en tant que type prédéterminé d'informations de priorité.

7. Serveur (1400) selon la revendication 1, comportant en outre:
des moyens permettant de stocker des données de profil d'abonné indiquant un type de l'équipement d'abonné.

8. Serveur (1400) selon la revendication 7, dans lequel les moyens de traduction comprennent :
des moyens (340) permettant de traduire les informations dans un format d'abonné compatible avec le type d'équipement d'abonné indiqué dans les données stockées de profil d'abonné.

9. Serveur (1400) selon la revendication 1, dans lequel les moyens de transfert comprennent:
des moyens permettant de recevoir des requêtes de scrutation périodiques à partir de l'équipement d'abonné (212-219), et
des moyens permettant d'envoyer les informations traduites à l'équipement d'abonné (212-219) en réponse aux requêtes de scrutation.

10. Procédé permettant de transférer automatiquement des informations à un équipement d'abonné (212-219), comprenant les étapes consistant à :
recevoir des informations destinées à un abonné à partir d'un appelant dans un format de l'appelant, le procédé comprenant les étapes consistant à
traduire les informations dans un format d'abonné compatible avec l'équipement d'abonné (212-219); et le procédé étant **caractérisé par** les étapes consistant à
transférer automatiquement les informations traduites à l'équipement d'abonné (212-219) indépendamment de n'importe quelle action d'abonné, dans lequel l'étape de transfert comprend la sous-étape consistant à :
envoyer des signaux de sonnerie supprimés avec les informations traduites à l'équipement d'abonné (212-219).

11. Procédé selon la revendication 10, dans lequel l'étape de réception comprend les sous-étapes consistant à :
détecter des signaux provenant de l'appelant, et
déterminer le format de l'appelant à partir des signaux détectés.

12. Procédé selon la revendication 10, dans lequel l'étape de réception comprend les sous-étapes consistant à :
détecter des données de l'appelant, et
identifier l'appelant sur la base des données détectées de l'appelant.

13. Procédé selon la revendication 12, dans lequel l'étape de traduction comprend la sous-étape consistant à :
générer un message d'abonné à partir des données détectées de l'appelant et les informations traduites.

14. Procédé selon la revendication 13, dans lequel l'étape de transfert comprend la sous-étape consistant à :
émettre le message d'abonné afin qu'il soit affiché sur l'équipement d'abonné (212-219).

15. Procédé selon la revendication 10, dans lequel l'étape de réception comprend la sous-étape consistant à :
classer par priorité les informations reçues ; et
dans lequel l'étape de transfert comprend en outre la sous-étape consistant à :
émettre des signaux de sonnerie supprimés à l'équipement d'abonné (212-219) quand les informations reçues sont classées par priorité en tant que type prédéterminé d'informations de priorité.

16. Procédé selon la revendication 10, comportant en outre l'étape consistant à :
stocker des données de profil d'abonné indiquant un type de l'équipement d'abonné (212-219).

17. Procédé selon la revendication 16, dans lequel l'étape de traduction comprend la sous-étape consistant à :
traduire les informations dans un format d'abonné compatible avec le type d'équipement d'abonné indiqué dans les données stockées de profil d'abonné.

18. Procédé selon la revendication 10, dans lequel l'étape de transfert comprend les sous-étapes consistant à :
recevoir des requêtes de scrutation périodiques provenant de l'équipement d'abonné (212-219), et
envoyer les informations traduites à l'équipement d'abonné (212-219) en réponse aux requêtes de scrutation.
